(19) Europäisches Patentamt
European Patent Office
Office européen des brevets

(11) **EP 3 637 680 A1**

(12) **EUROPEAN PATENT APPLICATION**

(43) Date of publication:
**15.04.2020 Bulletin 2020/16**

(51) Int Cl.:
***H04L 12/18*** *(2006.01)*     ***H04M 3/56*** *(2006.01)*
***G06F 3/16*** *(2006.01)*

(21) Application number: **18199073.0**

(22) Date of filing: **08.10.2018**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Nokia Technologies Oy
02610 Espoo (FI)**

(72) Inventors:
 • **Eronen, Antti
 33820 Tampere (FI)**
 • **Laaksonen, Lasse
 33210 Tampere (FI)**
 • **Pihlajakuja, Tapani Johannes
 01300 Vantaa (FI)**
 • **Lehtiniemi, Arto
 33880 Lempäälä (FI)**

(74) Representative: **Sayer, Robert David
Venner Shipley LLP
200 Aldersgate
London EC1A 4HD (GB)**

(54) **SPATIAL AUDIO CAPTURE & PROCESSING**

(57) An apparatus, method and computer program is disclosed, comprising a means for determining that a first one of a plurality of audio capture devices, which collectively contribute respective audio signals to a spatial audio signal, has entered a condition associated with not contributing to the spatial audio signal. A further means may be provided, configured responsive to said determination for causing removal of the one or more audio signals contributed by the first audio capture device from the spatial audio signal.

EP 3 637 680 A1

**Description**

**Field**

Example embodiments relate to methods and systems for spatial audio capture and processing.

**Background**

It is known to capture audio from different spatial locations and generate a spatial audio signal for subsequent rendering such that the audio is perceived by a listening user as coming from the respective locations in space. The user may consequently feel immersed in a virtualised audio space. The capturing may involve using a capture device having an array of multiple microphones, or combining signals from multiple, spatially-separated microphones.

**Summary**

A first aspect provides an apparatus comprising: means for determining that a first one of a plurality of audio capture devices, which collectively contribute respective audio signals to a spatial audio signal, has entered a condition associated with not contributing to the spatial audio signal; and means responsive to said determination for causing removal of the one or more audio signals contributed by the first audio capture device from the spatial audio signal.

The condition may be entered responsive to determining that the first audio capture device has moved outside of a spatial reference area.

The means for enabling removal may be configured automatically, without user input, to remove the one or more audio signals contributed by the first audio capture device from the spatial audio signal.

The means for enabling removal may be configured to provide a user interface prompt to the first audio capture device to permit user selection of whether to maintain or remove the one or more audio signals contributed by the first audio capture device, and to remove the said one or more audio signals contributed by the first audio capture device from the spatial audio signal responsive to receiving a removal selection.

User selection may be by means of any suitable user input means, for example, but not limited to, a touch screen whereby a user can make a selection by means of touching the touch screen or hovering part of their body above the screen. Alternatively, or additionally, the apparatus may also comprise one or more sensors such as one or more accelerometers and/or gyroscopes for individually (or in combination) sensing one or more user gestures, e.g. particular movements, which may serve as a selection input. Alternatively, or additionally, the apparatus 160 may comprise an audio input means, e.g. a microphone, which may enable user input such as by means of speech.

The means for enabling removal may be configured to provide a user interface prompt to the first audio capture device to permit removal by one of two or more selectable methods, wherein in a first method the one or more audio signals are removed from the spatial audio signal and maintained as a separate audio object for transmission with the spatial audio signal, and in a second method whereby the one or more audio signals are removed from the spatial audio signal and not transmitted.

The apparatus may further comprise means for enabling re-introduction of one or more audio signals from the first audio capture device responsive to determination that the first audio capture device has moved within the determined reference area.

The determining means may be configured to determine the reference area based on the positions of the plurality of audio capture devices at a reference time, wherein the reference area is a bounded area which includes said positions.

The determining means may be configured to determine the reference area as a bounded volumetric area which includes said positions.

The determining means may be configured to determine the reference area by means of determining distances between different pairwise combinations of the plurality of audio capture devices to provide a distance matrix, and wherein determining that the first capture has moved outside the reference area comprises determining that a predetermined number of said distances to other audio capture devices is greater than a predetermined threshold.

The apparatus may further comprise means for adjustment, based on user input, of the predetermined number of said distances and/or the predetermined threshold.

The reference time may be a teleconference start time.

The determining means may be configured, subsequent to entering the condition, to modify the reference area responsive to a received event.

The determining means may be configured to modify the reference area responsive to receiving an indication that at least one of said audio capture devices has either moved, joined or left the teleconference.

The apparatus may further comprise means for providing to the first audio capture device a graphical representation of at least part of the reference area for display at the first audio capture device and to receive at the first audio capture device a modification signal for modifying the size of the teleconference reference area.

According to a second aspect, there is provided a method, comprising: determining that a first one of a plurality of audio capture devices, which collectively contribute respective audio signals to a spatial audio signal, has entered a condition associated with not contributing to the spatial audio signal; and responsive to said determination, causing removal of the one or more audio signals contributed by the first audio capture device from the spatial audio signal.

According to a third aspect, there is provided a non-transitory computer readable storage medium comprising program instructions stored thereon, which, when executed by at least one processor, causes the at least one processor to perform a method, comprising: determining that a first one of a plurality of audio capture devices, which collectively contribute respective audio signals to a spatial audio signal, has entered a condition associated with not contributing to the spatial audio signal; and responsive to said determination, causing removal of the one or more audio signals contributed by the first audio capture device from the spatial audio signal.

According to a fourth aspect, there is provided a computer program comprising instructions for causing an apparatus to perform at least the following: determining that a first one of a plurality of audio capture devices, which collectively contribute respective audio signals to a spatial audio signal, has entered a condition associated with not contributing to the spatial audio signal; and responsive to said determination, causing removal of the one or more audio signals contributed by the first audio capture device from the spatial audio signal.

According to a fifth aspect, there is provided an apparatus, the apparatus having at least one processor and at least one memory having computer-readable code stored thereon which when executed controls the at least one processor: to determine that a first one of a plurality of audio capture devices, which collectively contribute respective audio signals to a spatial audio signal, has entered a condition associated with not contributing to the spatial audio signal; and responsive to said determination, to cause removal of the one or more audio signals contributed by the first audio capture device from the spatial audio signal.

Reference to "means" herein may refer to an apparatus, processor, controller or similar hardware for performing the stated operation or operations. The processor, controller or similar hardware may have at least one associated memory having computer-readable code stored thereon which when executed controls the processor, controller or similar hardware to perform the stated operation or operations. The stated operation or operations may also or alternatively be performed using firmware or one or more electrical or electronic circuits.

## Drawings

Example embodiments will now be described, by way of non-limiting example, with reference to the accompanying drawings, in which:

FIG. 1 is a schematic view of an ad-hoc network comprised of audio capture devices according to an example embodiment;

FIG. 2 is a flow diagram of operations for generating a spatial audio signal using measured relative distances, according to an example embodiment;

FIG. 3 is a schematic view of the FIG. 1 network when one device has moved;

FIG. 4 is a schematic view of the FIG. 3 network when the moved device is separated from the network;

FIG. 5 is a flow diagram of operations for determining when to automatically detach a device from the network, according to an example embodiment;

FIG. 6 is a flow diagram of operations for prompting a user to select whether or not to detach their device from the network, according to an example embodiment;

FIG. 7 is a perspective view of a teleconference scenario comprising a plurality of audio capture devices forming a constellation, according to an example embodiment;

FIG. 8 is a perspective view of the FIG. 7 scenario with a determined reference area superimposed, according to an example embodiment;

FIG. 9A is a top-plan view of the FIG. 7 scenario;

FIG. 9B is a top-plan view showing how a change in orientation of an audio capture device may change the reference area, according to an example embodiment;

FIG. 9C is a top-plan view showing how a change in position of an audio capture device may leave the reference area unchanged, according to an example embodiment;

FIG. 10 is a schematic view of a plurality of audio capture devices in relation to a reference area, one or more of said devices including a graphical user interface for indicating the extent of the reference area for modification, according to an example embodiment;

FIGS. 11A - 11D are side views showing multiple audio capture devices on surfaces of different heights, for explaining how a volumetric reference area may be determined in different ways, according to example embodiments;

FIG. 12 is a schematic view of components of a processing apparatus for performing operations described herein, according to example embodiments;

FIGS. 13A and 13B are schematic views of non-transitory media for storing software code for performing operations described herein, according to example embodiments;

FIG. 14 is a flow diagram of operations for enabling removal of one or more audio signals from a spatial audio signal based on capture device position, according to example embodiments; and

FIG. 15 is an example screenshot of a graphical user interface when presenting a plurality of options on an audio capture device, according to example embodiments.

## Detailed Description

Example embodiments relate to spatial audio capture and processing in which multiple audio capture devices, one or more of which may be a mobile device, are connected in some way to provide an ad-hoc network and which may collaborate in terms of contributing their captured signals to a spatial audio signal. A mobile device may be a 3rd Generation Partnership Project (3GPP) device although embodiments are applicable to any future standard or mobile technology. Example embodiments particularly focus on methods and systems for teleconferencing applications, which may include audio-only teleconferences or those involving both audio and video which may or may not be delivered and/or presented in virtual or augmented reality format. However, other embodiments may be envisaged outside of the field of teleconferencing.

In particular, the multiple audio capture devices may jointly create at least one of: a common spatial audio signal transmitted upstream from at least one local device (which may be one of the capture devices), or enhanced audio signals transmitted upstream from at least two local devices (where at least one of the enhanced audio signals may be a spatial audio signal). The spatial audio signal may be, e.g., a first-order ambisonics (FOA) or a metadata-assisted spatial audio (MASA) signal with or without additional audio objects. The upstream signal may be encoded utilizing, e.g., the 3GPP IVAS codec. The connectivity between the local capture devices may be implemented according to any suitable technology, e.g., a WiFi connectivity, 3G, LTE, 5G or other network protocols or future network protocols.

The audio capture and processing according to the embodiments may be beneficial for example to represent in a teleconference a conference room audio capture using an adaptive ad-hoc network of capture devices by providing an efficiently encoded upstream spatial audio signal. The adaptive capture configuration allows for users to utilize their devices in various roles during the teleconference at least in order to improve the audio capture or temporarily switch into a private mode.

For example, example embodiments may relate to methods and systems for controlling what happens when one or more participants enter a mode or condition association with no longer contributing to the spatial audio signal. For example, this may be determined if the one or more devices physically move in relation to a reference area associated with a teleconference, as will become evident later on. For example, this may be determined if an associated private mode is selected at the one or more devices, e.g. through a graphical user interface (GUI.)

User selection may be by means of any suitable user input means, for example, but not limited to, a touch screen whereby a user can make a selection by means of touching the touch screen or hovering part of their body above the screen. Alternatively, or additionally, the apparatus may also comprise one or more sensors such as one or more accelerometers and/or gyroscopes for individually (or in combination) sensing one or more user gestures, e.g. particular movements, which may serve as a selection input. Alternatively, or additionally, the apparatus 160 may comprise an audio input means, e.g. a microphone, which may enable user input such as by means of speech.

Example embodiments may also relate to how participants to a teleconference may perform certain modifications.

A teleconference is a call or communications session involving audio, and possibly video, not limited to two people or two communications devices. A teleconference is usually set-up and maintained using hardware and/or software referred to as a conference bridge, or simply "bridge". The bridge may be a dedicated device, which may be local or remote from audio and/or video capture devices associated with participants. In some cases, one or more capture devices associated with a participant may provide the bridge.

As used herein, a capture device is any device for capturing at least audio, and possibly video signals and/or positional information and may comprise any device having a microphone or for receiving signals from an associated microphone. For example, a capture device may comprise, but is not limited to, a mobile telephone, a smartphone, a tablet computer, a laptop computer, a smartwatch, a digital assistant, a desktop computer, a games console, a smart television, a smart speaker, a virtual reality headset, etc.

Example embodiments are described in relation to an ad-hoc network of capture devices involved in contributing their respective captured audio signals to a spatial audio signal, e.g. for an immersive teleconference. The spatial audio signal may be generated by one or more of said capture devices, or a different device such as a dedicated conference bridge or other suitably-configured audio processing device, which may be local or remote from the ad-hoc network. A spatial audio signal is a signal produced by processing audio received from different spatial locations such that a spatial percept is encoded or otherwise represented within the signal; hence the spatial audio signal, when decoded and rendered at a listening device, provides the audio such that it is perceived as coming from different directions and possibly at different volumes. This may reflect the distance at which one of the sound sources is from the listening position or a reference point. Hence, the rendered spatial audio signal may take into account the location and/or movement of, or any actions performed at, the listening device. The listening user may therefore experience immersion in the audio. It is comparable with the video concept of virtual and augmented reality based on captured video content.

In a teleconference scenario, capture devices may provide an ad-hoc network by virtue of the fact that participants to the teleconference may leave, and new participants may join, during the lifetime of the teleconference. Where the ad-hoc network comprises two or more participants within a localised or common space, e.g. in a conference room, their respective capture devices may collaboratively capture audio from different participants. For example, a first participant may have a smartphone and a second participant may have a laptop computer, both capture devices having a microphone. If the first participant speaks, the audio may be captured by both capture devices, albeit from different directions and/or at different volumes (including, e.g., reflections and reverberation related to the speech signal), and the captured audio signals from both capture devices may be processed to provide an immersive spatial audio signal. Each capture device is said to contribute to the spatial audio signal in such case.

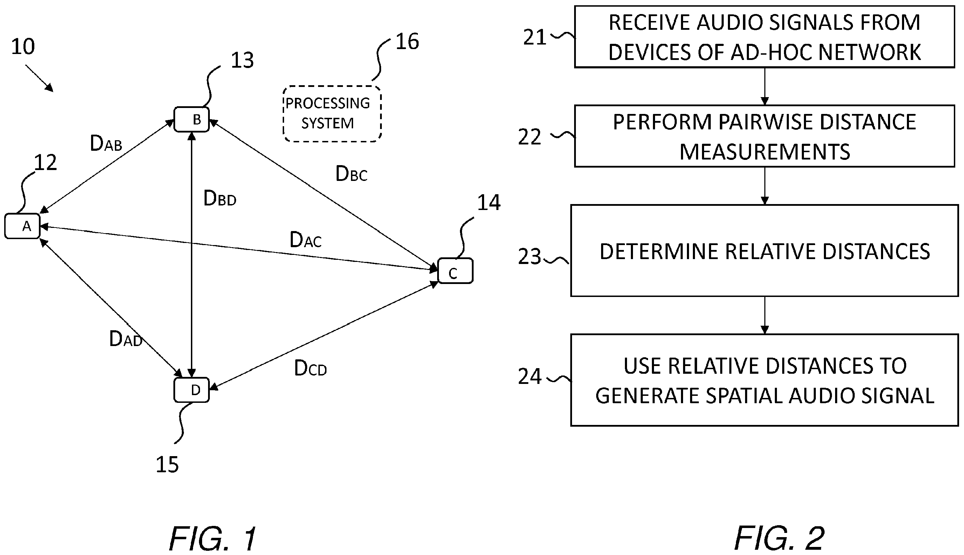

FIG. 1 is a schematic diagram showing a first teleconference scenario 10, involving first to fourth audio capture devices 12 - 15 (labelled A - D) which may be associated with respective participants.

An ad-hoc network may be established for example by pairing between each of the first to fourth audio capture devices 12 - 15 using any suitable method. For example, Bluetooth may be used for pairing. The ad-hoc network may be established for example by another networking technology, e.g. using a WiFi network, 3G, LTE, 5G or other network protocols or future network protocols. In some embodiments, a dedicated device, which may or may not be one of the first to fourth audio capture devices 12 - 15, may act as a hub or bridge which provides the intercommunication between the audio capture devices.

In some embodiments, each of the first to fourth audio capture devices 12 - 15 may determine their relative locations to the other audio capture devices using the pairing connections. This determination may be by means of self-localisation. For example, based on pairwise delay measurements Dnm between audio signals captured by the first to fourth audio capture devices 12 - 15, it is possible to determine the relative positions between all devices using the pairwise relationships. Delay measurements Dnm may use time difference of arrival (TDOA) methods. For further information, reference is made to [1] Parviainen, Mikko & Pertilä, Pasi & Hämäläinen, Matti. (2014), Self-localization of Wireless Acoustic Sensors in Meeting Rooms, 2014 4th Joint Workshop on Hands-Free Speech Communication and Microphone Arrays, HSCMA 2014.

10.1109/HSCMA.2014.6843270. Reference is also made to [2] Mikko Parviainen, Pasi Pertilä, Self-localization of dynamic user-worn microphones from observed speech, Applied Acoustics, Volume 117, Part A, 2017, Pages 76-85 in which a method is proposed which is capable of tracking a distance matrix, allowing self-localization of moving microphones. The contents of both references are incorporated herein by reference.

The result of the pairwise determinations may be a distance matrix (DM), which may be of the form:

$$
DM \quad = \quad
\begin{matrix}
D_{AA} & D_{AB} & D_{AC} & D_{AD} \\
D_{BA} & D_{BB} & D_{BC} & D_{BD} \\
D_{CA} & D_{CB} & D_{CC} & D_{CD} \\
D_{DA} & D_{DB} & D_{DC} & D_{DD}
\end{matrix}
$$

In some embodiments, the distance matrix may also indicate orientations for one or more of the first to fourth audio capture devices 12 - 15 if, for example, the devices comprise multiple microphones or some other feature or structure that indicates or senses orientation.

Any suitable method for determining relative position and/or orientation may be used. Acoustic tracking is useful in scenarios where at least two audio capture devices 12 - 15 are located in the same physical space.

The distance matrix may be determined and maintained at one of the first to fourth audio capture devices 12 - 15 or at a separate processing device, such as a processing system 16, which may be local or remote. It may therefore be determined and maintained at the same node as is used to provide and maintain the teleconference, for example. The processing system 16 may be any suitable processing device, and may or may not provide teleconferencing bridging functionality.

From the distance matrix, relative coordinates may be determined, or at least estimated, by finding the node geometry in Euclidean space which fulfils the restrictions of the distance matrix.

The distance matrix will usually be symmetric, i.e. Dnm = Dmn.

Dynamic tracking of the distance matrix for enabling device position tracking may occur even as one or more of the audio capture devices 12 - 15 move, as discussed in reference [2] above. The distance matrix may reflect in data form a so-called constellation of the audio capture devices 12 - 15. In some embodiments, the constellation may be used to provide a reference area for subsequent processing decisions. The reference area may be two-dimensional or three-dimensional (volumetric). The reference area may have the same approximate footprint as the constellation or may be slightly larger (including a "buffer zone") and cover the capture devices 12 - 15 in the ad-hoc network. The initial constellation may be designated as an initial reference area. Example embodiments may involve dynamically modifying the reference area based on detected events.

Where there are only two capture devices, e.g. the first and second capture devices 12, 13, forming the ad-hoc network, then the area may be defined by the single relative distance between the devices.

Rotations of any of the first to fourth audio capture devices 12 - 15 may be tracked, either as a local or collective measurement. In other words, each of the first to fourth audio capture devices 12 - 15 may track their own orientation, and share it with others, or orientation tracking may be a multi-channel extension whereby the processing system 16 collects the orientation data and performs the tracking.

FIG. 2 is a flow diagram showing processing operations of a processing system for generating a spatial audio signal from an ad-hoc network comprising two or more audio capture devices, such as the first to fourth audio capture devices 12 - 15 shown in FIG. 1. As mentioned, the processing system may be one of the first to fourth audio capture devices 12 - 15 or a separate processing system 16 (as in FIG. 1) which may be local or remote from the devices. The order and/or numbering of operations is not necessarily indicative of the order of processing. Some operations may be performed at the same time, for example. Fewer, or a greater, number of operations may be provided.

A first operation 21 may comprise receiving audio signals from devices of an ad-hoc network. A prior operation, may, for example, involve performing pairing or other networking of the first to fourth audio capture devices 12 - 15 or receiving information about said pairings.

A second operation 22 may comprise performing pairwise distance measurements, which may alternatively comprise receiving said distance measurements from another node if performed elsewhere.

A third operation 23 may comprise determining relative distances between the first to fourth audio capture devices 12 - 15, which may alternatively comprise receiving said relative distances from another node if performed elsewhere.

A fourth operation 24 may comprise using the relative distances determined or received from the third operation 23 to generate a spatial audio signal.

The operations of FIG. 2 effectively create the spatial audio signal using the first to fourth audio capture devices 12 - 15 as an ad-hoc microphone array, each collaborating or contributing to the spatial audio signal. It will be appreciated that the operations of FIG. 2 may be adapted to include both relative distances and orientations in some embodiments, where such orientation data is available.

As will be appreciated, the nature of ad-hoc networks is that one or more devices may leave and one or more may join the network over time. In some embodiments, therefore, operations may be performed to cater for such dynamic situations. For example, a predetermined distance threshold may be set to determine a condition when one or more of the first to fourth audio capture devices 12 - 15 leaves the ad-hoc network, for the purposes of modifying audio capture. The predetermined distance may be measured with regard to a reference constellation, e.g. the initial constellation or associated reference area. Where there are only two audio capture devices, this may be a single distance threshold. Where there are more than two audio capture devices, as in the FIG. 1 example, the condition may be met when for example a predetermined number of the distances in the updated (tracked) distance matrix DM exceed the predetermined distance threshold.

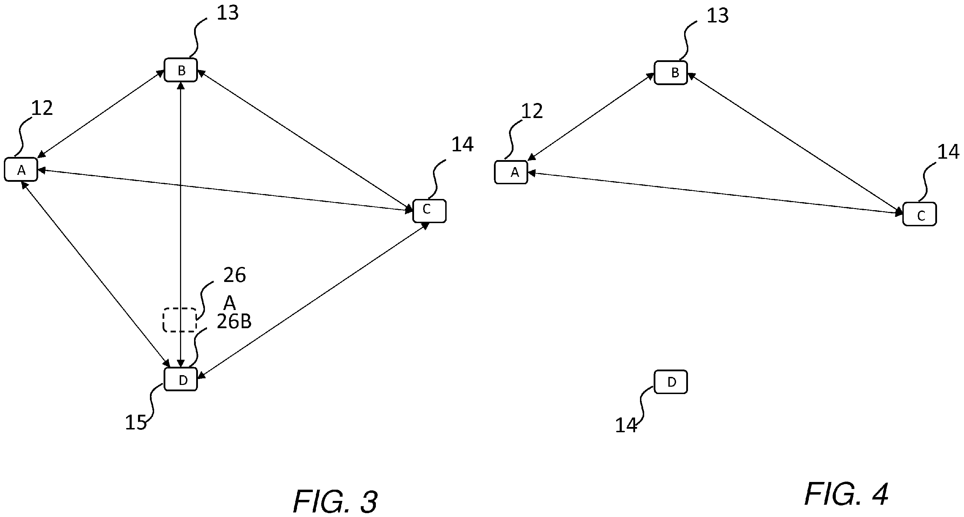

For example, as indicated in FIG. 3, if the fourth audio capture device 15 were to be moved by an associated user from a previous position 26A to a new position 26B, then the values in the tracked distance matrix (DM t+i) will change as indicated in bold below:

$$\text{DM}\ t{+}1 \qquad = \qquad
\begin{matrix}
D_{AA} & D_{AB} & D_{AC} & \mathbf{D_{AD}} \\
D_{BA} & D_{BB} & D_{BC} & \mathbf{D_{BD}} \\
D_{CA} & D_{CB} & D_{CC} & \mathbf{D_{CD}} \\
\mathbf{D_{DA}} & \mathbf{D_{DB}} & \mathbf{D_{DC}} & D_{DD}
\end{matrix}$$

It may be predetermined that a leave condition occurs when, say, two or more distances in the updated distance matrix (or four, taking into account the symmetry) exceed the predetermined distance threshold, which may be any user-defined or default value. For example, the user-defined or default value may be a relative value such as 150% of the initial distance of the moved, fourth audio capture device 15 from the other audio capture devices 12 - 14. Other rules may be used. For example, in the case that two or more of the audio capture devices 12 - 15 simultaneously move, then the predetermined criteria may be satisfied for said two or more capture devices. In this case, it may be that only one of said two or more audio capture devices 12 - 15 is considered to leave the network, for example that with the largest deviation.

In the FIG. 3 circumstance, the processing system 16 may identify that the fourth audio capture device 15 has left the teleconference, as shown in FIG. 4. In response, the fourth audio capture device 15 may no longer contribute to the spatial audio signal that is generated by the processing system 16. In some embodiments, this occurs automatically. In other embodiments, this is not automatic, but occurs in response to user selection from a prompt giving the user prior notification options.

For example, the user may be prompted via the fourth audio capture device 15 that they may choose to remain in the teleconference (contributing to the spatial audio signal) notwithstanding their increased distance from the reference constellation or area. This may be termed a "remain mode." They may alternatively select remaining in the teleconference but with their audio detached from the spatial encoding and instead encoded as a separate audio object that may be provided with the spatial audio signal. This may be termed an "object mode." For example, in the object mode, the separate audio object may be processed in some way independently of the spatial audio signal. They may alternatively select complete detachment from the spatial encoding and hence no audio from the fourth audio capture device 15 is used by the processing system 16 for providing audio to other users. This alternative may be termed a "private mode" of operation, and may be useful when the associated user is in the same space (e.g. room) of other teleconference users, but has moved further away to talk to someone else and does not wish their conversation to be heard in the teleconference. The private mode may be temporary.

In some embodiments, the private mode of operation may trigger or enable a private connection to be set up between the associated user and another participant, e.g. one currently in the teleconference.

User control of the various selectable modes may be by means of a graphical user interface (GUI) presented on a display screen of, in this case, the fourth audio capture device 15.

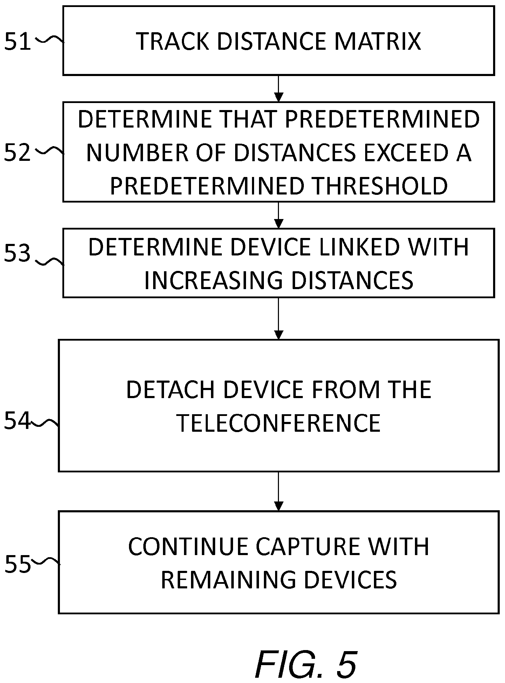

FIG. 5 is a flow diagram showing processing operations of the processing system 16 for automatic detachment of an audio capture device based on a change in distance from the reference constellation or area. As mentioned, the processing system 16 may alternatively be provided by one of the first to fourth audio capture devices 12 - 15. The order and/or numbering of operations is not necessarily indicative of the order of processing. Some operations may be performed at the same time, for example. Fewer, or a greater, number of operations may be provided.

A first operation 51 may comprise tracking the distance matrix DM, e.g. by monitoring periodically or continuously in real-time changes in distances for an existing ad-hoc network.

A second operation 52 may comprise determining that a predetermined number of distances (in the distance matrix DM) exceed a predetermined distance threshold.

A third operation 53 may comprise determining one or more audio capture devices linked to the determination in the second operation 52.

A fourth operation 54 may comprise detaching the identified one or more audio capture devices from the teleconference.

A fifth operation 55 may comprise continuing the audio capture using the remaining one or more audio capture devices.

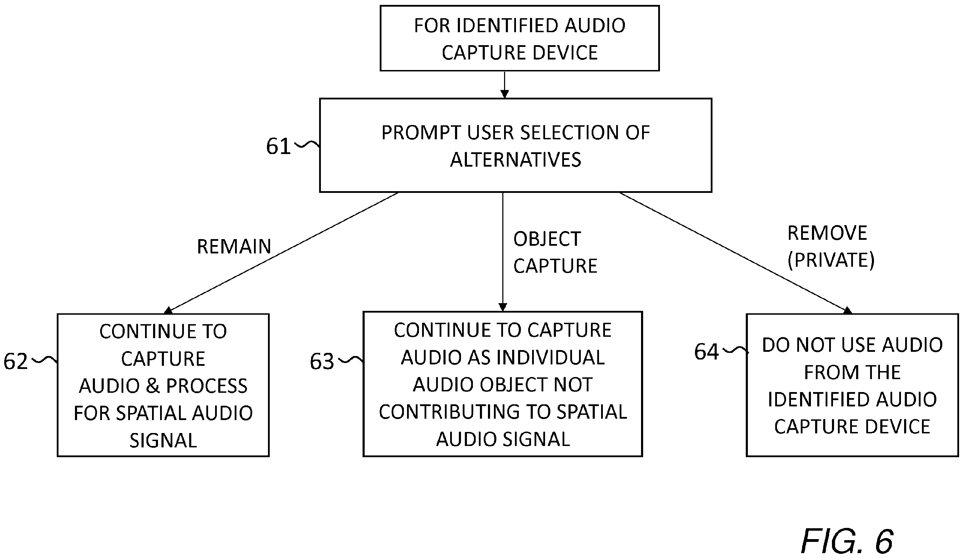

FIG. 6 is a flow diagram showing processing operations of the processing system 16 for selective detachment of an audio capture device responsive to a user selection made via a GUI at said audio capture device. As mentioned, the processing system 16 may alternatively be provided by one of the first to fourth audio capture devices 12 - 15. The order and/or numbering of operations is not necessarily indicative of the order of processing. Some operations may be performed at the same time, for example. Fewer, or a greater, number of operations may be provided.

A first operation 61 may comprise prompting user selection of two or more alternative options relating to detachment. The first operation 61 and subsequent operations are prompted to one or more identified devices, for example in response to operation 53 mentioned above.

The prompts may comprise, for example, a prompt to remain in the teleconference, a prompt to remain in the teleconference but as a separate audio object rather than contributing to the spatial audio signal, and a prompt to detach from the teleconference in a private mode.

Responsive to selection of the remain mode, in a second operation 62, audio from the identified device continues to be captured and processed for the spatial audio signal.

Responsive to selection of the object mode, in a third operation 63, audio from the identified device continues to be captured but is processed as a separate audio object and is not processed as part of the spatial audio signal. In some embodiments, the distances of the identified audio capture device are no longer used, e.g. for updating or tracking the distance matrix DM.

Responsive to selection of the private mode, in a fourth operation 64, audio from the identified device is not used, i.e. it is removed from the common teleconference upstream. This may mean that the audio from the identified device is subtracted from the spatial audio signal by suitable processing.

For example, the identified device may transmit a signal to the other devices and/or to the teleconference bridge (if provided in a separate device) that they are to leave the teleconference / enter a private mode.

Additionally, or alternatively, the other devices in the teleconference may actively attempt to remove audio from said device from the overall capture. Audio from the identified device may still be used, e.g. in a private connection to another user, which may be another participant in the teleconference. The distances of the identified audio capture device may no longer be used, e.g. for updating or tracking the distance matrix DM.

In some embodiments, the processing system 16 may be configured automatically to determine which of the possible modes are available based on the current position(s) of the audio capture devices 12 - 15. For a given audio capture device 12 - 15, the available modes may be presented on the GUI, or all modes may be presented with the available ones shown in one form or colour (e.g. green) and the other, non-available mode or modes in another form or colour (e.g. grey).

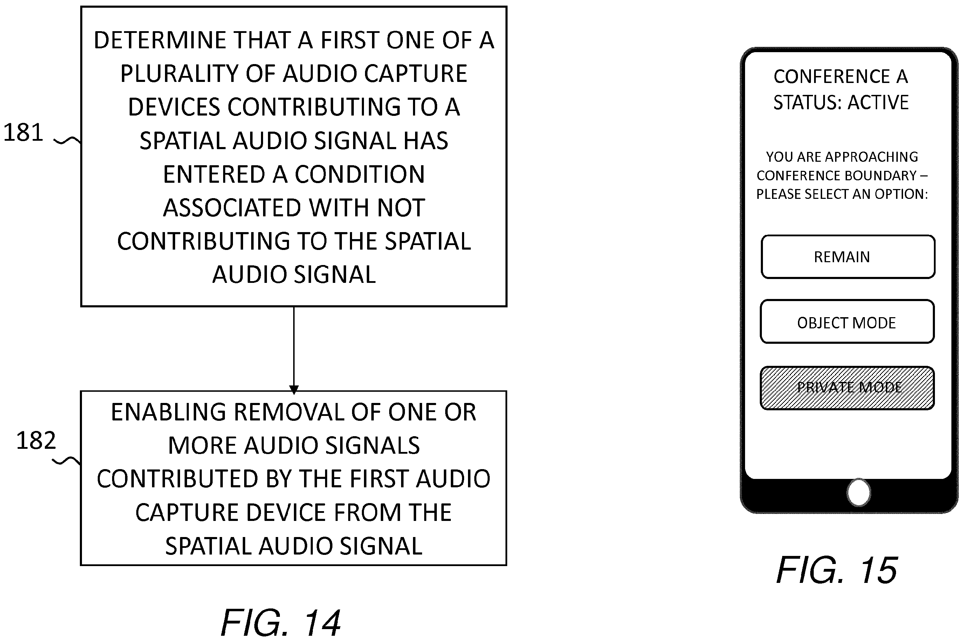

For example, when a user and associated audio capture device 12 - 15 moves away from the reference area, the object mode option may turn green but the private mode option may remain grey because it is determined that the other audio capture devices may still capture the user's speech even were their device put into private mode. FIG. 15 shows an example GUI presented on such an audio capture device, where the private mode option is prevented for selection. If the same user moves even further away, the private mode option may then turn green as the system may determine that it is suitably far away that it can subtract the user's audio from the signals captured by the other phones in the ad-hoc network.

In some embodiments, removal of one or more audio signals may be enabled responsive to user selection, i.e. not necessarily linked to movement or changes in distance. Accordingly, in some embodiments, the GUI may not be so restrictive in terms of which possible modes may be selected. For example, the object mode and/or the private mode may be selectable by the user at any time without restriction. The other devices in the teleconference may actively attempt to remove audio from said device from the overall capture. Audio from the identified device may still be used, e.g. in a private connection to another user, which may be another participant in the teleconference.

In some embodiments, where orientation of an audio capture device may be determined and tracked, the private mode option may also be permitted for GUI selection based on the user turning away from the other audio capture devices; this is based on the assumption that less audio can be picked up by the other devices. Other orientation changes which in some embodiments may trigger the private mode may include, for example, turning the device back side up, lifting it up, or taking the phone to hand, or any other suitable orientation changes which can be detected by the system using orientation sensing means or other sensing means.

In some embodiments, the private mode may be triggered automatically instead of in response to user selection through a GUI. The private mode may be triggered responsive to the above-mentioned criteria, for example based on distance being above a predetermined threshold. In some embodiments, one or more settings within one or more of the first to fourth audio capture devices 12 - 15 may determine that the private mode is entered under such circumstances. Where one of the said first to fourth audio capture devices 12 - 15 act as the teleconference bridge, it may be one or more settings in said device that determines automatic triggering to the private mode. Where an external device to the ad-hoc network acts as the teleconference bridge, it may be one or more settings in said external device that determines automatic triggering to the private mode. The external device may be the processing system 16 shown in FIG. 1, for example.

As mentioned above, the constellation of the first to fourth audio capture devices 12 - 15 which form part of the ad-hoc network may provide a two or three-dimensional teleconference reference area. This reference area may be used as the trigger as to whether one or more of the first to fourth audio capture devices 12 - 15 is or are beyond the distance threshold defined by its boundary. The reference area may be updated periodically or in real-time based on events, such as when an audio capture device 12 - 15 leaves the teleconference in accordance with any of the above methods (automatic or due to user selection), subsequently re-joins the teleconference and/or when a new audio capture device joins the teleconference later on. This allows for automatic adaption of the reference area based on the context of users.

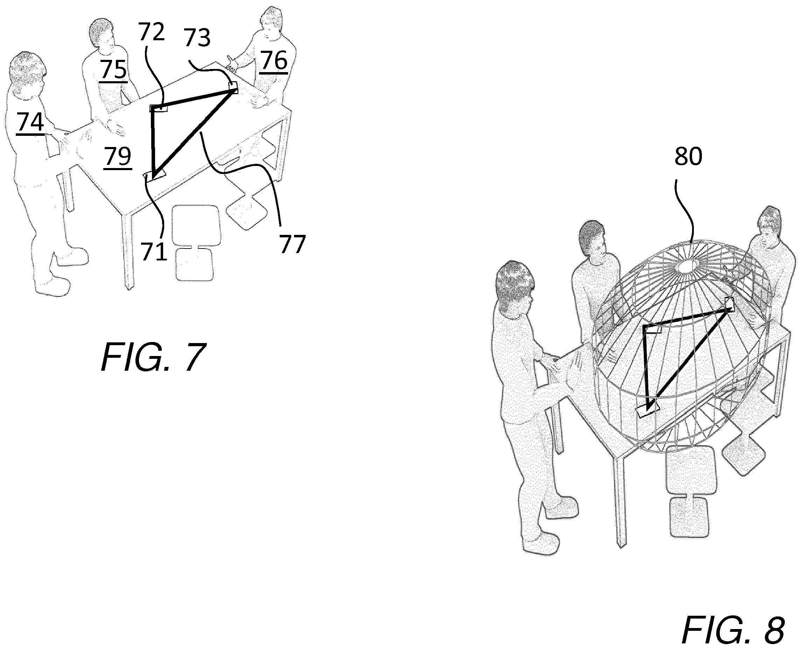

For example, FIG. 7 shows a scenario in which three audio capture devices 71 - 73 in the form of smartphones associated with respective users 74 - 75 are provided on a surface 79 and form an ad-hoc network. In the same manner as described above, the audio capture devices 71 - 73 may connect and their relative positions may be determined using any suitable method, e.g. via a distance matrix DM. As mentioned above, the ad-hoc network can be set-up by a processing system which may comprise one of said audio capture devices 71 - 73 or a separate processing system 16, as indicated in FIG.1. The processing system 16 may therefore act as a bridge and perform other functions as described herein.

In some embodiments, any of the audio capture devices (whether the audio capture devices 12 - 15 shown in FIG. 1 or the audio capture devices 71 - 73 shown in FIG. 7) may act as the teleconference bridge. In such a scenario, if the audio capture device 12-15, 71 - 73 that is acting as the teleconference bridge leaves the teleconference in the manner described above, e.g. due to movement or user-selection, the bridge functionality may be handed over to another audio capture device in the teleconference, or an external device, which may assume the bridge role. The selection of the other audio capture device to hand over to may be determined using a suitable algorithm. There may, for example, be a priority order established based on one or more of the order of devices that joined the network, the processing and/or memory capabilities of the respective devices, how near the devices are to the current bridge, etc.

Whichever device is used for the teleconference bridge, that device may be configured to receive the audio signals from all participating devices to the teleconference and produce the single, combined spatial audio signal.

The processing system 16 as described above may determine a reference area based on the resulting constellation, indicated by reference numeral 77. The reference area may be any suitable shape and may for example be a circle or oval. For example, the reference area may be larger than, but enclose, the constellation 77.

FIG. 8 shows a volumetric reference area 80 to provide one example. In an example embodiment, the processing system 16 may provide and adapt the volumetric reference area 80 of a particular shape.

The main use of the reference area 80 is to determine whether or not an audio capture device 71 - 73 is part of the common capture, i.e. making an active contribution to the upstream. For example, if a user 74 moves their audio capture device 71 within the reference area 80, the device maintains part of the common capture. A secondary use of the reference area 80 may be to determine a mode of individual sound source capture, e.g. when user tracking is enabled. For example, if the user 74 who has been inside the reference area 80 leans out, their voice may not be cancelled but it may not be enhanced either. Sound from the user 74 may be treated as ambient sound.

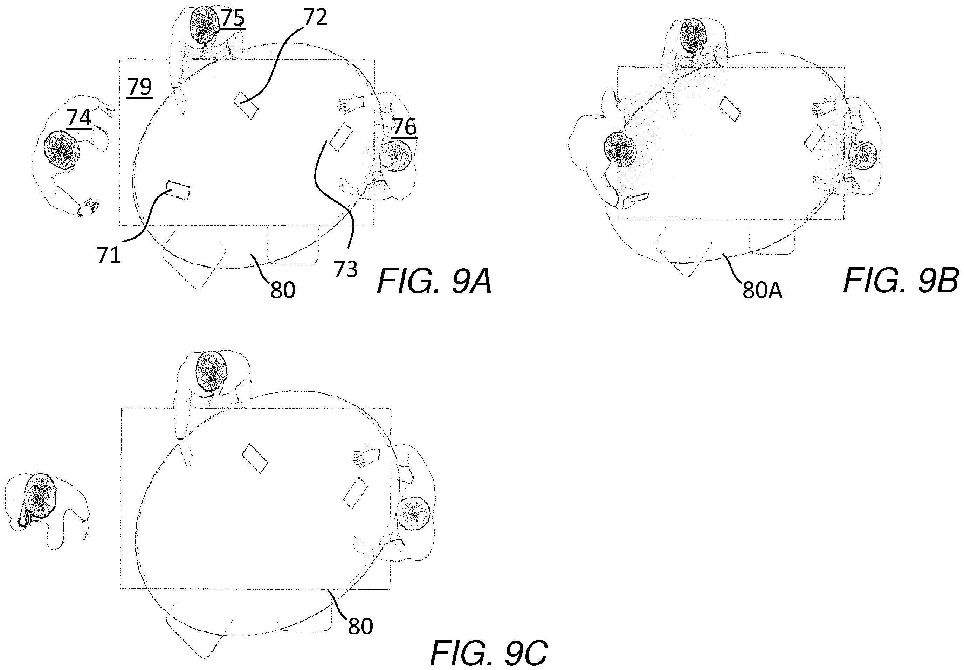

FIG. 9A shows in top-plan view said reference area 80 with reference to the surface 79 and the audio capture devices 71 - 73. FIG. 9B shows in top-plan view how the reference area 80 may change to a new reference area 80A in terms of shape and/or size based on a detected event, such as the user of the first audio capture device 71 lifting or orienting said device differently, detectable from signals generated by the device's accelerometers, gyroscopes and/or the tracked distance matrix DM with respect to the second and third audio capture devices 72, 73. This may cater for small changes in position of the associated user 74, to avoid inadvertently causing them to leave the teleconference due to small movements.

FIG. 9C shows in top-plan view how the FIG. 9A reference area 80 remains, at least for a predetermined time period, even though the first audio capture device 71 has actually left the ad-hoc network or teleconference, for example based on the processes already described due to larger movement beyond the reference area 80. The idea here is to cater for the possibility that the departure of the first audio capture device 71 is temporary, and that the associated first user 74 may return imminently after completing what may be a short duration call. The first user 74 is likely to return close to their original position, and hence it is appropriate to leave the reference area as it is. After a predetermined period of time, e.g. 5 minutes, the FIG. 9C reference area 80 may update by becoming smaller if the first user 74 does not return. Alternatively, and/or in addition, movement of any of the remaining devices 72, 73 may trigger an update of the reference area 80.

In the event that the first user 74 does subsequently return such that the first audio capture device 71 is within the FIG. 9C reference area 80, they may re-join the ad-hoc network and teleconference automatically, or possibly in response to acceptance of an invitation prompt sent by the processing system 16 via a GUI to the first audio capture device.

In some embodiments, as new users and therefore audio capture devices join the ad-hoc network, e.g. by moving within the current reference area 80, they may join the network automatically or in response to acceptance of an invitation prompt sent by the processing system 16 via a GUI to the respective audio capture device or devices. The reference area 80 may update responsive to the joining.

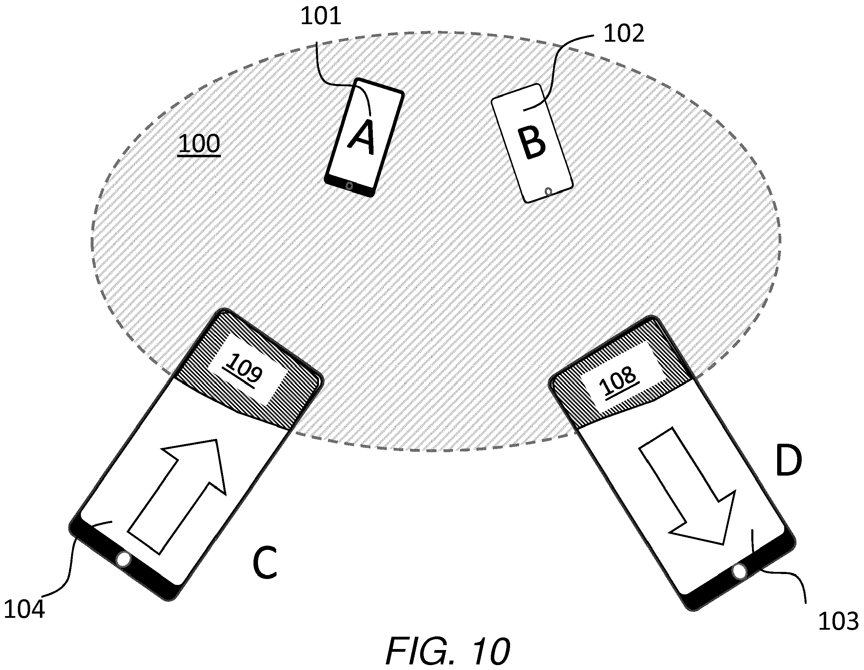

FIG. 10 is a top-plan view of a reference area 100 in relation to first to fourth audio capture devices 101 - 104. The first and second audio capture devices 101, 102 are assumed to be wholly within the reference area 100 and currently part of an ad-hoc network set up by the processing system 16. The third and fourth audio capture devices 103, 104 are assumed to be moving, respectively from outside the reference area 100 and towards it, and vice versa. As indicated, in some embodiments, respective GUIs 108, 109 on the respective audio capture devices 103, 104 may indicate graphically the overlap of said devices with the current reference area 100. This enables the respective users to see where the boundary of the reference area 100 is. In the case of the fourth audio capture device 104, this may enable the associated user to select to join the ad-hoc network or teleconference, for example by tapping on the overlapping section. In the case of the third audio capture device 103, this may warn the associated user that they are approaching the boundary and that any further movement in the same direction will cause them to leave the ad-hoc network. It may be that the user may choose to leave the ad-hoc network by tapping on the non-overlapping section (unshaded) or remain by tapping the overlapping section 108.

In some embodiments, users may enable changing the size and/or shape of the current reference area 108 by dragging via the GUI the boundary of the reference area inwards or outwards. This may be allowed under certain conditions, for example if an audio capture device 101 - 104 is laid flat on a surface. In this way, a user such as the user associated with the third audio capture device 103, responsive to the prompt that they are approaching the boundary of the reference area 100, may extend the reference area by dragging the boundary of the overlapping section 108 backwards so that said audio capture device remains within the reference area.

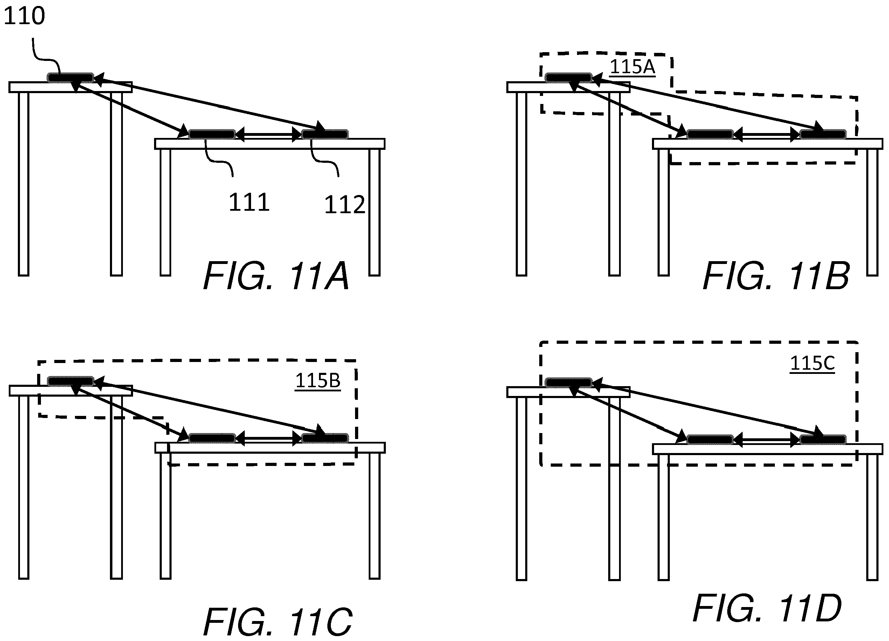

FIGS. 11A - 11D indicate the situation where audio capture devices 110 - 112 may be situated at different heights and how (in FIGS. 11B - 11D) suitable volumetric reference areas may be defined by the processing system 16.

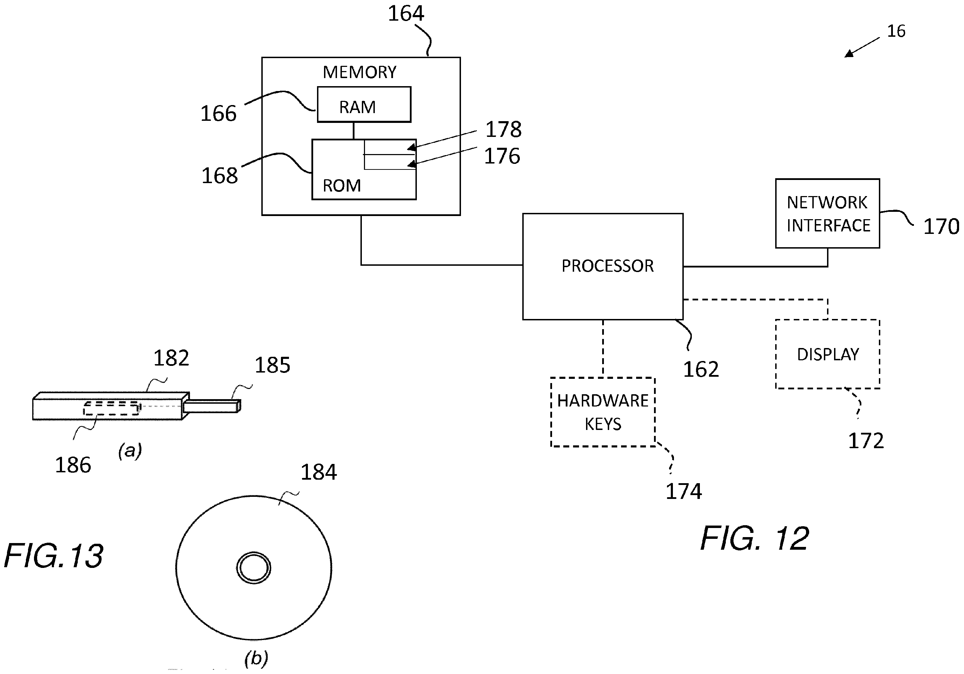

FIG. 12 is a schematic view of an apparatus 160 which may provide the processing system, whether as a separate processing system 16 as shown in FIG. 1 or as one of the audio capture devices shown in the various figures herein.

The apparatus 160 may have a processor 162, a memory 164 closely-coupled to the processor and comprised of a RAM 166 and ROM 168. The apparatus 160 may comprise a network interface 170, and optionally a display 172 and one or more hardware keys 174. The apparatus 160 may comprise one or more such network interfaces 170 for connection to a network, e.g. a radio access network. The one or more network interfaces 170 may also be for connection to the internet, e.g. using WiFi or similar, such as 3G, LTE, 5G or other network protocols or future network protocols. The processor 162 is connected to each of the other components in order to control operation thereof. In some embodiments, the display 172 may comprise a touch-screen permitting user inputs and selections using the touch screen and/or by using a hovering gesture input. Alternatively, or additionally, the apparatus 160 may also comprise sensors such as one or more accelerometers and/or gyroscopes for individually or in combination sensing one or more user gestures, e.g. particular movements, which may serve as inputs in any of the above embodiments. Alternatively, or additionally, the apparatus 160 may comprise an audio input, e.g. a microphone, may be provided as a form of user input.

The memory 164 may comprise a non-volatile memory, a hard disk drive (HDD) or a solid state drive (SSD). The ROM 168 of the memory stores, amongst other things, an operating system 176 and may store one or more software applications 178. The RAM 166 of the memory 164 may be used by the processor 162 for the temporary storage of data. The operating system 166 may contain code which, when executed by the processor, implements the operations as described above and also below, for example in the various flow diagrams. As mentioned below, the memory 164 may comprise any suitable form, and may even be implemented in the cloud.

The processor 162 may take any suitable form. For instance, the processor 162 may be a microcontroller, plural microcontrollers, a processor, or plural processors and the processor may comprise processor circuitry.

FIG. 13A and FIG. 13B show tangible non-volatile media, respectively a removable memory unit 182 and a compact disc (CD) 184, storing computer-readable code which when run by a computer may perform methods according to embodiments described above and below. The removable memory unit 182 may be a memory stick, e.g. a USB memory stick, having internal memory 186 storing the computer-readable code. The memory 186 may be accessed by a computer system via a connector 185. The CD 184 may be a CD-ROM or a DVD or similar. Other forms of tangible storage media may be used.

For completeness, FIG. 14 is a flow diagram showing processing operations of the processing system 16. As mentioned, the processing system 16 may alternatively be provided by one of the audio capture devices described herein. The order and/or numbering of operations is not necessarily indicative of the order of processing. Some operations may be performed at the same time, for example. Fewer, or a greater, number of operations may be provided.

A first operation 181 may comprise determining that a first one of a plurality of audio capture devices, which collectively contribute respective audio signals to a spatial audio signal, has entered a condition associated with not contributing to the spatial audio signal. For example, this may be due to determining that the first capture device has moved outside of a spatial reference area, or it may be due to user selection (a prompt may be issued to a GUI of said audio capture device either informing that a private mode will be entered if nothing further is done, or providing the option to select a private mode.) A second operation 182 may comprise, responsive to said determination, enabling removal of the one or more audio signals contributed by the first audio capture device from the spatial audio signal.

In some embodiments, upon determining that removal is to be enabled (whether automatically or in response to a user selection) the relevant audio capture device (e.g. the fourth audio capture device "D" 15 shown in FIGS. 3 and 4) may send, e.g. with its audio signal or as a separate signal, data (e.g. in metadata, as one or more parameters etc.) indicative of that device's change to a different mode, e.g. a private mode. In some embodiments, this may be temporary, and the parameter may indicate that the relevant audio captured device 15, although entering a private mode, is to remain in the teleconference.

Responsive to receiving this data, the other audio capture devices 12 - 14 may subtract the audio signal of the relevant device 15 from the captured audio signals being sent to the teleconference bridge. For example, the other audio capture devices 12 - 14 may analyse the audio signal that they are capturing and subtract from said audio signal that part which comes from the relevant audio capture device 15. The signal will be identifiable as coming from the relevant audio capture device 15 by means of, for example, metadata transmitted with the audio signal which identifies the originating audio capture device. This principle can be applied to any of the audio capture devices 12 - 14.

The above-described embodiments may involve the user of any suitable codec within the spatial audio capture devices and/or the processing system 16, and indeed any suitable code in development for future use. For example, the proposed 3GPP IVAS codec, an extension of the 3GPP EVS codec, may be used as it is suitable for and intended to be used for immersive audio services over 4G and 5G mobile networks. This multipurpose audio codec may handle the encoding, decoding and rendering of speech, music and generic audio. It may support channel-based audio and scene-based audio inputs including spatial information about the sound field and sound sources. It may also operate with relatively low-latency to enable conversational services as well as support error robustness under various transmission conditions. One example usage of IVAS encoding is with metadata-assisted spatial audio (MASA) whereby the format consists of channels and spatial metadata.

Some example embodiments enable users to enter and/or leave an ad-hoc network of audio capture devices in a non-intrusive and intuitive way, and some embodiments enable users to modify the network in a simple and intuitive way.

Implementations of any of the above described blocks, apparatuses, systems, techniques or methods include, as non-limiting examples, implementations as hardware, software, firmware, special purpose circuits or logic, general purpose hardware or controller or other computing devices, or some combination thereof. Some embodiments may be implemented in the cloud and utilize virtualized modules.

Embodiments of the present invention may be implemented in software, hardware, application logic or a combination of software, hardware and application logic. The software, application logic and/or hardware may reside on memory, or any computer media. In an example embodiment, the application logic, software or an instruction set is maintained on any one of various conventional computer-readable media. In the context of this document, a "memory" or "computer-readable medium" may be any non-transitory media or means that can contain, store, communicate, propagate or transport the instructions for use by or in connection with an instruction execution system, apparatus, or device, such as a computer.

Reference to, where relevant, "computer-readable storage medium", "computer program product", "tangibly embodied computer program" etc., or a "processor" or "processing circuitry" etc. should be understood to encompass not only computers having differing architectures such as single/multi-processor architectures and sequencers/parallel architectures, but also specialised circuits such as field programmable gate arrays FPGA, application specify circuits ASIC, signal processing devices and other devices. References to computer program, instructions, code etc. should be understood to express software for a programmable processor firmware such as the programmable content of a hardware device as instructions for a processor or configured or configuration settings for a fixed function device, gate array, programmable logic device, etc.

As used in this application, the term "circuitry" refers to all of the following: (a) hardware-only circuit implementations (such as implementations in only analogue and/or digital circuitry) and (b) to combinations of circuits and software (and/or firmware), such as (as applicable): (i) to a combination of processor(s) or (ii) to portions of processor(s)/software (including digital signal processor(s)), software, and memory(ies) that work together to cause an apparatus, such as a server, to perform various functions) and (c) to circuits, such as a microprocessor(s) or a portion of a microprocessor(s), that require software or firmware for operation, even if the software or firmware is not physically present.

In this brief description, reference has been made to various examples. The description of features or functions in relation to an example indicates that those features or functions are present in that example. The use of the term 'example' or 'for example' or 'may' in the text denotes, whether explicitly stated or not, that such features or functions are present in at least the described example, whether described as an example or not, and that they can be, but are not necessarily, present in some of or all other examples. Thus 'example', 'for example' or 'may' refers to a particular instance in a class of examples. A property of the instance can be a property of only that instance or a property of the class or a property of a sub-class of the class that includes some but not all of the instances in the class. It is therefore implicitly disclosed that a features described with reference to one example but not with reference to another example, can where possible be used in that other example but does not necessarily have to be used in that other example.

Although embodiments of the present invention have been described in the preceding paragraphs with reference to various examples, it should be appreciated that modifications to the examples given can be made without departing from the scope of the invention as claimed.

Features described in the preceding description may be used in combinations other than the combinations explicitly described.

Although functions have been described with reference to certain features, those functions may be performable by other features whether described or not.

Although features have been described with reference to certain embodiments, those features may also be present in other embodiments whether described or not.

Whilst endeavoring in the foregoing specification to draw attention to those features of the invention believed to be of particular importance it should be understood that the Applicant claims protection in respect of any patentable feature or combination of features hereinbefore referred to and/or shown in the drawings whether or not particular emphasis has been placed thereon.

**Claims**

1. Apparatus comprising:

   means for determining that a first one of a plurality of audio capture devices, which collectively contribute respective audio signals to a spatial audio signal, has entered a condition associated with not contributing to the spatial audio signal; and
   means responsive to said determination for causing removal of the one or more audio signals contributed by the first audio capture device from the spatial audio signal.

2. Apparatus according to claim 1, wherein the condition is entered responsive to determining that the first audio captured device has moved outside of a spatial reference area.

3. Apparatus according to claim 1 or claim 2, wherein the means for enabling removal is configured automatically, without user input, to remove the one or more audio signals contributed by the first audio capture device from the spatial audio signal.

4. Apparatus according to claim 1 or claim 2, wherein the means for enabling removal is configured to provide a user interface prompt to the first audio capture device to permit user selection of whether to maintain or remove the one or more audio signals contributed by the first audio capture device, and to remove the said one or more audio signals contributed by the first audio capture device from the spatial audio signal responsive to receiving a removal selection.

5. Apparatus according to claim 4, wherein the means for enabling removal is configured to provide a user interface prompt to the first audio capture device to permit removal by one of two or more selectable methods, wherein in a first method the one or more audio signals are removed from the spatial audio signal and maintained as a separate audio object for transmission with the spatial audio signal, and in a second method whereby the one or more audio signals are removed from the spatial audio signal and not transmitted.

6. Apparatus according to claim 2 or any claim dependent thereon, further comprising means for enabling re-introduction of one or more audio signals from the first audio capture device responsive to determination that the first audio capture device has moved within the determined reference area.

7. Apparatus according to claim 2 or any claim dependent thereon, wherein the determining means is configured to determine the reference area based on the positions of the plurality of audio capture devices at a reference time, wherein the reference area is a bounded area which includes said positions.

8. Apparatus according to claim 7, wherein the determining means is configured to determine the reference area as a bounded volumetric area which includes said positions.

9. Apparatus according to claim 7 or claim 8, wherein the determining means is configured to determine the reference area by means of determining distances between different pairwise combinations of the plurality of audio capture devices to provide a distance matrix, and wherein determining that the first capture has moved outside the reference area comprises determining that a predetermined number of said distances to other audio capture devices is greater than a predetermined threshold.

10. Apparatus according to any of claims 7 to 9, wherein the reference time is a teleconference start time.

11. Apparatus according to claim 2 or any claim dependent thereon, wherein the determining means is configured, subsequent to entering the condition, to modify the reference area responsive to a received event.

12. Apparatus according to claim 11, wherein the determining means is configured to modify the reference area responsive to receiving an indication that at least one of said audio capture devices has either moved, joined or left the teleconference.

13. Apparatus according to claim 11 or claim 12, further comprising means for providing to the first audio capture device a graphical representation of at least part of the reference area for display at the first audio capture device and to receive at the first audio capture device a modification signal for modifying the size of the teleconference reference area.

**14.** A method, comprising:

determining that a first one of a plurality of audio capture devices, which collectively contribute respective audio signals to a spatial audio signal, has entered a condition associated with not contributing to the spatial audio signal; and
responsive to said determination, causing removal of the one or more audio signals contributed by the first audio capture device from the spatial audio signal.

**15.** A non-transitory computer readable medium comprising program instructions stored thereon for performing a method, comprising:

determining that a first one of a plurality of audio capture devices, which collectively contribute respective audio signals to a spatial audio signal, has entered a condition associated with not contributing to the spatial audio signal; and
responsive to said determination, causing removal of the one or more audio signals contributed by the first audio capture device from the spatial audio signal.

*FIG. 2*

*FIG. 1*

FIG. 4

FIG. 3

```
┌─────────────────────────────────────────┐
51 ─┤         TRACK DISTANCE MATRIX          │
└─────────────────────────────────────────┘
                     │
                     ▼
┌─────────────────────────────────────────┐
│      DETERMINE THAT PREDETERMINED        │
52 ─┤   NUMBER OF DISTANCES EXCEED A        │
│       PREDETERMINED THRESHOLD           │
└─────────────────────────────────────────┘
                     │
                     ▼
┌─────────────────────────────────────────┐
53 ─┤   DETERMINE DEVICE LINKED WITH        │
│        INCREASING DISTANCES             │
└─────────────────────────────────────────┘
                     │
                     ▼
┌─────────────────────────────────────────┐
│       DETACH DEVICE FROM THE            │
54 ─┤         TELECONFERENCE                │
│                                         │
└─────────────────────────────────────────┘
                     │
                     ▼
┌─────────────────────────────────────────┐
│       CONTINUE CAPTURE WITH             │
55 ─┤       REMAINING DEVICES              │
└─────────────────────────────────────────┘
```

*FIG. 5*

EP 3 637 680 A1

EP 3 637 680 A1

```
                    ┌──────────────────────┐
                    │  FOR IDENTIFIED AUDIO │
                    │    CAPTURE DEVICE     │
                    └──────────┬───────────┘
                               │
                               ▼
         ┌──────────────────────────────────────────┐
    61 ~ │      PROMPT USER SELECTION OF             │
         │            ALTERNATIVES                    │
         └──────────────────────────────────────────┘
```

REMAIN                OBJECT              REMOVE
                      CAPTURE             (PRIVATE)

```
   ┌─────────────┐   ┌──────────────────┐   ┌──────────────────┐
62~│ CONTINUE TO │ 63~│ CONTINUE TO CAPTURE│64~│ DO NOT USE AUDIO│
   │  CAPTURE    │   │ AUDIO AS INDIVIDUAL│   │   FROM THE       │
   │AUDIO & PROCESS│ │ AUDIO OBJECT NOT   │   │ IDENTIFIED AUDIO │
   │FOR SPATIAL AUDIO│ │CONTRIBUTING TO SPATIAL│ │ CAPTURE DEVICE │
   │   SIGNAL    │   │   AUDIO SIGNAL     │   │                  │
   └─────────────┘   └──────────────────┘   └──────────────────┘
```

*FIG. 6*

80

*FIG. 8*

76

77

72 73

75

79

74

71

*FIG. 7*

FIG. 9A

FIG. 9B

FIG. 9C

EP 3 637 680 A1

*FIG. 10*

FIG. 11A

FIG. 11B

FIG. 11C

FIG. 11D

MEMORY 164

RAM 166

178
176

168

ROM

NETWORK
INTERFACE 170

PROCESSOR

162

HARDWARE
KEYS

174

DISPLAY

172

*FIG. 12*

182    185

186    *(a)*

184

*FIG.13*    *(b)*

EP 3 637 680 A1

EP 3 637 680 A1

DETERMINE THAT A FIRST ONE OF A PLURALITY OF AUDIO CAPTURE DEVICES CONTRIBUTING TO A SPATIAL AUDIO SIGNAL HAS ENTERED A CONDITION ASSOCIATED WITH NOT CONTRIBUTING TO THE SPATIAL AUDIO SIGNAL

181

ENABLING REMOVAL OF ONE OR MORE AUDIO SIGNALS CONTRIBUTED BY THE FIRST AUDIO CAPTURE DEVICE FROM THE SPATIAL AUDIO SIGNAL

182

*FIG. 14*

CONFERENCE A
STATUS: ACTIVE

YOU ARE APPROACHING
CONFERENCE BOUNDARY –
PLEASE SELECT AN OPTION:

REMAIN

OBJECT MODE

PRIVATE MODE

*FIG. 15*

201 | PAIR DEVICES

↓

202 | CAPTURE AUDIO SIGNALS

↓

203 | TIME SYNCHRONIZE AUDIO SIGNALS AND MATCH MICROPHONE GAINS

↓

204 | PERFORM PAIRWISE DISTANCE MEASUREMENTS

↓

205 | OBTAIN RELATIVE DISTANCES

↓

206 | DETERMINE RELATIVE COORDINATES BY FINDING THE NODE GEOMETRY IN EUCLIDEAN SPACE WHICH FULFILS THE RESTRICTIONS OF THE DISTANCE MATRIX

→

207 | SUBJECT THE MULTI-MICROPHONE SIGNAL RECEIVED FROM THE AD-HOC MICROPHONE ARRAY TO SHORT-TIME FOURIER TRANSFORM (STFT)

↓

208 | DIRECTION ANALYSIS AT FREQUENCY BANDS TO DETERMINE BANDWISE DIRECTION-OF-ARRIVAL

↓

209 | DETERMINE RATIO PARAMETERS

↓

210 | DETERMINE TRANSPORT SIGNAL BASED ON THE ANALYZED DOA AND RATIO PARAMETERS

↓

211 | ENCODE USING MASA FORMAT

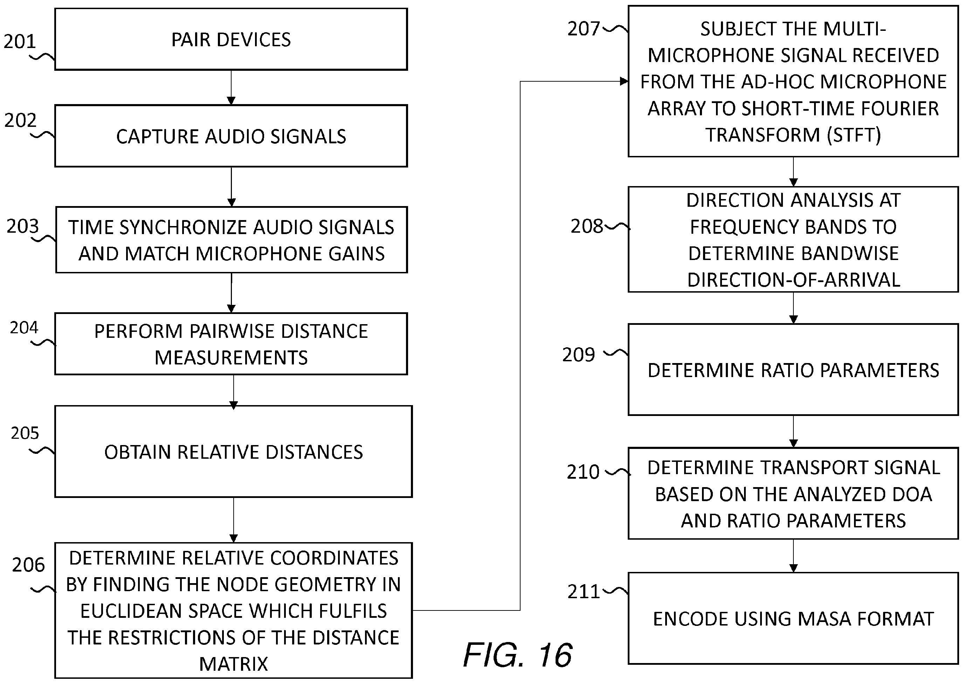

*FIG. 16*

Europäisches
Patentamt

European
Patent Office

Office européen
des brevets

# EUROPEAN SEARCH REPORT

**Application Number**

EP 18 19 9073

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2013/022216 A1 (GANONG III WILLIAM F [US] ET AL) 24 January 2013 (2013-01-24) * figure 1A * * paragraph [0046] - paragraph [0057] * * paragraph [0085] - paragraph [0092] * ----- | 1-10 | INV. H04L12/18 H04M3/56 G06F3/16 |
| X | EP 3 122 066 A1 (HARMAN INT IND [US]) 25 January 2017 (2017-01-25) * figures 2-3 * * paragraph [0012] - paragraph [0036] * * paragraph [0050] - paragraph [0057] * ----- | 1-4,6-15 | |

**TECHNICAL FIELDS SEARCHED (IPC)**

H04L
H04M
G06F

The present search report has been drawn up for all claims

| Place of search | Date of completion of the search | Examiner |
|---|---|---|
| The Hague | 21 February 2019 | Alliot, Sylvain |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
   ..................................................
& : member of the same patent family, corresponding
   document

EPO FORM 1503 03.82 (P04C01)

**EP 3 637 680 A1**

## ANNEX TO THE EUROPEAN SEARCH REPORT
## ON EUROPEAN PATENT APPLICATION NO.

EP 18 19 9073

This annex lists the patent family members relating to the patent documents cited in the above-mentioned European search report.
The members are as contained in the European Patent Office EDP file on
The European Patent Office is in no way liable for these particulars which are merely given for the purpose of information.

21-02-2019

| Patent document cited in search report | | Publication date | Patent family member(s) | | Publication date |
|---|---|---|---|---|---|
| US 2013022216 | A1 | 24-01-2013 | NONE | | |
| EP 3122066 | A1 | 25-01-2017 | CN | 106375902 A | 01-02-2017 |
| | | | EP | 3122066 A1 | 25-01-2017 |
| | | | KR | 20170012121 A | 02-02-2017 |
| | | | US | 2017026740 A1 | 26-01-2017 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **PARVIAINEN, MIKKO ; PERTILÄ, PASI ; HÄMÄLÄINEN, MATTI.** Self-localization of Wireless Acoustic Sensors in Meeting Rooms. *4th Joint Workshop on Hands-Free Speech Communication and Microphone Arrays, HSCMA 2014,* 2014

- **MIKKO PARVIAINEN ; PASI PERTILÄ.** Self-localization of dynamic user-worn microphones from observed speech. *Applied Acoustics,* 2017, vol. 117, 76-85